# EUROPÄISCHE PATENTSCHRIFT

(11) **EP 3 515 774 B1**
(45) Veröffentlichungstag und Bekanntmachung des Hinweises auf die Patenterteilung: **27.01.2021**
(21) Anmeldenummer: 17780636.1
(22) Anmeldetag: 19.09.2017
(51) Int. Cl.: B60T 13/74, B60T 13/66, B60T 8/36, B60T 8/40

(54) **ELEKTROHYDRAULISCHES KRAFTFAHRZEUGSTEUERGERÄT**
ELECTROHYDRAULIC MOTOR VEHICLE CONTROL DEVICE
APPAREIL ÉLECTRO-HYDRAULIQUE DE COMMANDE DE VÉHICULE À MOTEUR

(30) Priorität: 21.09.2016 DE 102016218094
(43) Veröffentlichungstag der Anmeldung: 31.07.2019
(73) Patentinhaber: Continental Teves AG & Co. OHG, 60488 Frankfurt am Main (DE)
(72) Erfinder: FEIGEL, Hans-Jörg, 61191 Rosbach (DE); TARANDEK, Kristijan, 63263 Neu-Isenburg (DE)
(86) Internationale Anmeldenummer: PCT/EP2017/073547
(87) Internationale Veröffentlichungsnummer: WO 2018/054863

(56) Entgegenhaltungen:
- EP-A2- 1 016 515
- WO-A1-02/060734
- DE-A1- 4 133 879
- DE-A1- 10 350 316
- DE-A1-102009 056 765
- DE-A1-102012 213 216
- US-A1- 2009 189 439
- US-A1- 2015 075 156
- US-A1- 2016 264 114

## Beschreibung

Die Erfindung betrifft ein elektrohydraulisches Kraftfahrzeugsteuergerät gemäß dem Oberbegriff von Anspruch 1.

Aus der DE 10 2012 220 485 A1 ist ein elektrohydraulisches Kraftfahrzeugsteuergerät bekannt, welches eine Hydraulikeinheit, einen Elektromotor und eine elektronische Kontrolleinheit mit einer erste Leiterplatte zur Aufnahme von elektrischen und/oder elektronischen Bauteilen umfasst.

Aus der WO 2013/023953 A1 ist eine Bremsbetätigungseinheit bekannt, bei welcher ein durch den Fahrzeugführer betätigbarer Hauptbremszylinder, eine elektrisch steuerbare Druckbereitstellungseinrichtung und eine Ventil-Anordnung in einem Gehäuse angeordnet sind. Der Elektromotor der Druckbereitstellungseinrichtung ist an einer ersten Seitenfläche des Gehäuses befestigt. Die elektronische Steuer- und Regeleinheit der Bremsbetätigungseinheit ist an der dem Elektromotor entgegengesetzten, zweiten Seitenfläche des Gehäuses angeordnet. Diese elektronische Steuer- und Regeleinheit dient dabei sowohl der Ansteuerung der Ventil-Anordnung als auch der Ansteuerung der Druckbereitstellungseinrichtung, somit sind die Leistungselektronik-Bauelemente des Elektromotors der Druckbereitstellungseinrichtung, gemeinsam mit den anderen Elektronik-Bauelementen (z.B. zur Ansteuerung der Ventil-Anordnung), in diese elektronischen Steuer- und Regeleinheit integriert. Die elektrischen Verbindungen zwischen dem Elektromotor und der elektronischen Steuer- und Regeleinheit müssen daher durch das Gehäuse geführt werden. Die Kontaktierung von Elektromotor und elektronischer Steuer- und Regeleinheit erfordert einen Stecker, der aufwendig, groß und teuer ist aufgrund der geforderten Unempfindlichkeit gegen Micro-Friction, welche durch wechselnde Ausdehnungen bei Temperaturänderungen verursacht werden kann.

Weiterhin ist für die Kühlung der elektronischen Steuer- und Regeleinheit, welche die Leistungselektronik des Elektromotors umfasst, ein aufwendiger Kühlmechanismus notwendig. Von Nachteil ist auch, dass die, für die Leistungselektronik geforderten Leitungsquerschnitte innerhalb einer Leiterplatte der elektronischen Steuer- und Regeleinheit zu einer teuren Leiterplatte führen, die für die großen anderen Bereiche der Leiterplatte, wo nur Signalleitungen geführt werden müssen, überdimensioniert ist.

Ein weiteres elektrohydraulisches Kraftfahrzeugsteuergerät ist aus der US A1 bekannt.

Der vorliegenden Erfindung liegt die Aufgabe zugrunde, die genannten Nachteile zu beheben. Weiterhin soll ein kompaktes elektrohydraulisches Kraftfahrzeugsteuergerät, insbesondere für eine "Brake-by-wire"-Bremsanlage für Kraftfahrzeuge, bereitgestellt werden, welches kostengünstig herzustellen ist. Diese Aufgabe wird erfindungsgemäß durch ein elektrohydraulischen Kraftfahrzeugsteuergerät gemäß Anspruch 1 gelöst.

Bevorzugt sind Leistungselektronik-Bauelemente zur Ansteuerung des Elektromotors auf der zweiten Leiterplatte angeordnet. Besonders bevorzugt ist die gesamte Leistungselektronik des Elektromotors auf der zweiten Leiterplatte angeordnet. Ganz besonders bevorzugt sind sechs Treiber-Bauelemente und ein integrierter Schaltungsbaustein zur Ansteuerung der Treiber-Bauelemente (als die gesamte Leistungselektronik des Elektromotors) auf der zweiten Leiterplatte angeordnet.

Bevorzugt handelt es sich bei dem Elektromotor um eine bürstenlosen Gleichstrommotor.

Bevorzugt ist der Elektromotor von einem Motorgehäuse zumindest teilweise umfasst. Besonders bevorzugt ist das Motorgehäuse um den Elektromotor gespritzt.

Die elektrisch steuerbare, hydraulische Druckquelle ist bevorzugt zumindest teilweise innerhalb der Hydraulikeinheit angeordnet. Besonders bevorzugt ist ein Druckraum der Druckquelle zumindest teilweise innerhalb der Hydraulikeinheit angeordnet.

Gemäß einer bevorzugten Ausführungsform des erfindungsgemäßen Kraftfahrzeugsteuergeräts sind die elektronische Kontrolleinheit und der Elektromotor an unterschiedlichen Seitenflächen der Hydraulikeinheit angeordnet, wobei die zweite Leiterplatte im Bereich der Seitenfläche angeordnet ist, an welcher der Elektromotor angeordnet ist. So ist ein kompaktes Kraftfahrzeugsteuergerät mit möglichst kleinen Seitenflächen möglich. Weiterhin sind die elektrischen und/oder elektronischen Bauelemente zur Ansteuerung des Elektromotors in der Nähe des Elektromotors angeordnet. Besonders bevorzugt sind die elektronische Kontrolleinheit und der Elektromotor an einander gegenüberliegenden Seitenflächen der Hydraulikeinheit angeordnet.

Die Hydraulikeinheit ist bevorzugt im Wesentlichen quaderförmig ausgebildet.

Bevorzugt besitzt die Hydraulikeinheit eine erste Seitenfläche und eine zweite Seitenfläche, wobei die elektronische Kontrolleinheit an der ersten Seitenfläche angeordnet ist und der Elektromotor an der zweiten Seitenfläche angeordnet ist, und wobei die zweite Leiterplatte im Bereich der zweiten Seitenfläche angeordnet ist. Besonders bevorzugt liegen die erste und die zweite Seitenfläche einander gegenüber.

Bevorzugt ist die elektronische Kontrolleinheit an der dem Elektromotor entgegengesetzten Seitenfläche angeordnet, um eine einfache elektrische oder magnetische Verbindung zwischen der Ventil-Anordnung und der Kontrolleinheit zu ermöglichen.

Bevorzugt umfasst das Kraftfahrzeugsteuergerät, insbesondere die Hydraulikeinheit, zumindest eine Bremspedalbetätigungsweg-Ermittlungseinrichtung oder einen Drucksensor. Die Bremspedalbetätigungsweg-Ermittlungseinrichtung bzw. der Drucksensor sind besonders bevorzugt in dem Bereich der Seitenfläche zu der elektronischen Kontrolleinheit angeordnet.

Bevorzugt ist die zweite Leiterplatte zwischen der Hydraulikeinheit und dem Elektromotor angeordnet. Dies ermöglicht es, dass die von den elektrischen und/oder elektronischen Bauelementen zur Ansteuerung des Elektromotors erzeugte Wärme direkt an die Hydraulikeinheit abgeleitet werden kann.

Bevorzugt weist die zweite Leiterplatte eine Ausnehmung auf, durch welche ein Teil der Druckquelle hindurchgeführt ist. Aufgrund der Ausnehmung ist eine platzsparende Anordnung der zweiten Leiterplatte, z.B. zwischen der Hydraulikeinheit und dem Elektromotor, möglich.

Bevorzugt ist die Druckquelle als eine hydraulische Zylinder-Kolben-Anordnung ausgeführt, deren Kolben durch den Elektromotor mittels eines Rotations-Translations-Getriebes verschiebbar ist.

Bevorzugt wird durch die Ausnehmung der zweiten Leiterplatte ein Zylinder oder ein Rotations-Translations-Getriebe der Druckquelle hindurchgeführt.

Gemäß einer bevorzugten Ausführungsform des erfindungsgemäßen Kraftfahrzeugsteuergeräts sind die Anschlüsse der Motorwicklungen des Elektromotors direkt auf der zweiten Leiterplatte kontaktiert. So kann auf einen kostenintensiven Stromverteileranschluss bzw. lösbare Steckverbindung für die Anschlüsse der Motorwicklungen verzichtet werden.

Bevorzugt wird der Elektromotor mit einem Motorgehäuse umspritzt. Besonders bevorzugt ist zumindest ein elektrisches oder elektronisches Bauelement der zweiten Leiterplatte in einer Tasche der Umspritzung angeordnet. Besonders bevorzugt ist ein Kondensator oder eine Induktivität in einer Tasche der Umspritzung angeordnet. So wird der zur Verfügung stehen Raum optimal genutzt.

Besonders bevorzugt sind die Leiterplattenteile derart ausgebildet, dass sie die Ausnehmung zur Durchführung eines Teils der Druckquelle bilden.

Bevorzugt ist die Versorgung der zweiten Leiterplatte mit elektrischer Energie redundant ausgeführt. Besonders bevorzugt sind eine erste und eine zweite Energiequelle zur Versorgung der zweiten Leiterplatte vorhanden. Um einen redundante Ansteuerung des Elektromotors zu erreichen, versorgt vorteilhafterweise die erste Energiequelle den ersten Leiterplattenteil und die zweite Energiequelle den zweiten Leiterplattenteil.

In der Hydraulikeinheit ist bevorzugt ein bremspedalbetätigbarer Hauptbremszylinder angeordnet, der zumindest einen Kolben und einen hydraulischen Druckraum begrenzt, wobei an den Druckraum Radbremsen anschließbar sind, und wobei der Kolben mittels einer Betätigungskräfte übertragenden Druckstange betätigbar ist. Das Kraftfahrzeugsteuergerät umfasst bevorzugt einen Bremspedalgefühlsimulator, der zumindest teilweise in der Hydraulikeinheit angeordnet ist.

Ein Vorteil der Erfindung liegt darin, dass eine einfachere und kostengünstigere Abfuhr der Wärme der elektrischen und/oder elektronischen Bauelemente möglich ist, da die hohen Ströme bei der Ansteuerung des Elektromotors getrennt von der ersten Leiterplatte der elektronischen Kontrolleinheit, nämlich nur auf der zweiten Leiterplatte, geführt werden. Eine aufwändige Kühlung für die hohe Ströme führenden elektrischen und/oder elektronischen Bauelemente ist nur bei der zweiten Leiterplatte notwendig. Die elektronische Kontrolleinheit bzw. die erste Leiterplatte führen dann nur vergleichsweise niedrige Ströme, die z.B. für die Ansteuerung der Ventile ausreichend sind, und so kann auf eine aufwändige Kühlung der ersten Leiterplatte bzw. in der elektronischen Kontrolleinheit verzichtet werden.

Auch hat die Erfindung den Vorteil, dass die erste Leiterplatte kostengünstiger, insbesondere mit geringeren Leitungsquerschnitten, ausgeführt sein kann.

Weiterhin bietet die Erfindung den Vorteil, dass keine aufwendige Durchkontaktierung, insbesondere von Hochstromleitungen, durch die Hydraulikeinheit erforderlich ist.

Gemäß einer bevorzugten Ausführungsform der Erfindung sind die Ventile auf der dem Elektromotor entgegengesetzten Seitenfläche der Hydraulikeinheit angeordnet.

Bevorzugt ist an einer oberen Seitenfläche der Hydraulikeinheit ein unter Atmosphärendruck stehender Druckmittelvorratsbehälter befestigt.

Bevorzugt wird das Kraftfahrzeugsteuergerät in einer Bremsanlage für Kraftfahrzeuge eingesetzt, die in einer "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Weitere bevorzugte Ausführungsformen der Erfindung ergeben sich aus den Unteransprüchen und der nachfolgenden Beschreibung anhand von Figuren.

Es zeigen
- Fig. 1: ein Ausführungsbeispiel eines erfindungsgemäßen elektrohydraulischen Kraftfahrzeugsteuergeräts,
- Fig. 2: eine erstes Ausführungsbeispiel einer zweiten Leiterplatte, und
- Fig. 3: eine zweites Ausführungsbeispiel einer zweiten Leiterplatte.

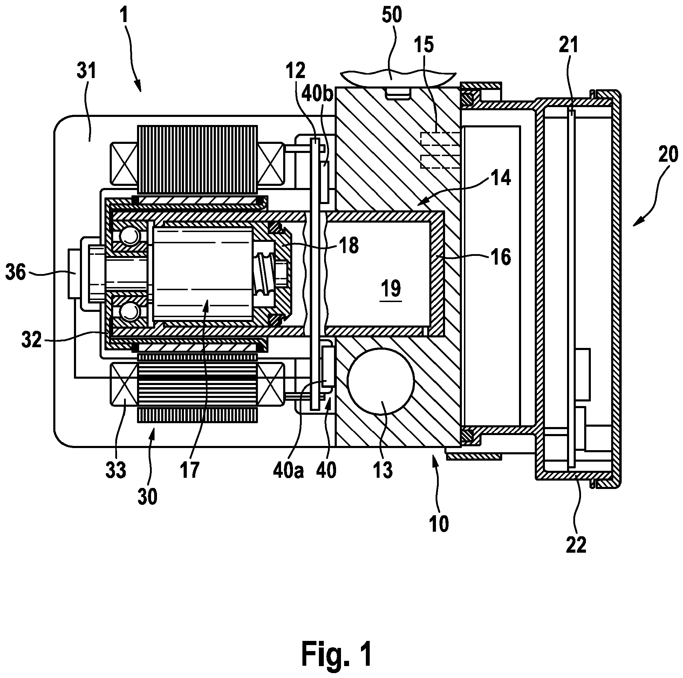

In Fig. 1 ist schematisch ein Ausführungsbeispiel eines erfindungsgemäßen elektrohydraulischen Kraftfahrzeugsteuergeräts für ein Kraftfahrzeugbremssystem mit hydraulisch betätigbaren Radbremsen dargestellt. Kraftfahrzeugsteuergerät 1 umfasst eine Hydraulikeinheit 10 (HCU: hydraulic control unit) mit elektrisch betätigbaren Ventilen 15, eine elektronische Kontrolleinheit 20 (ECU: electronic control unit) und einen Elektromotor 30 zum Antreiben einer elektrisch steuerbaren, hydraulischen Druckquelle 14. Getrennt von der elektronischen Kontrolleinheit 20 ist eine (zweite) Leiterplatte 12 angeordnet, auf welcher elektrische und/oder elektronische Bauelemente 40a, 40b zur Ansteuerung des Elektromotors 30 angeordnet sind. Auf Leiterplatte 12 ist beispielsgemäß die Leistungselektronik 40 des Elektromotors 30 angeordnet.

Elektromotor 30 umfasst einen Rotor 32 und einen Stator 33 und ist beispielsgemäß als ein bürstenloser Gleichstrommotor ausgeführt. Elektromotor 30 wird beispielsgemäß von einem Motorgehäuse 31 zumindest teilweise umfasst. Motorgehäuse 31 ist als ein Kunststoffspritzteil ausgeführt.

Elektromotor 30 ist an einer ersten Seitenfläche der Hydraulikeinheit 10 angeordnet.

Hydraulikeinheit 10 umfasst beispielsgemäß neben den Ventilen 15 einen nur schematisch, in Form einer Zylinderbohrung in der Hydraulikeinheit 10 dargestellten Hauptbremszylinder 13. Hauptbremszylinder 13 umfasst zumindest einen hydraulischen Druckraum und einen mittels einer Druckstange von einem Fahrzeugführer betätigbaren Betätigungskolben (nicht dargestellt), der den hydraulischen Druckraum begrenzt. An den Druckraum sind mittels hydraulischer Verbindungen die nicht dargestellten Radbremsen des Kraftfahrzeugbremssystems anschließbar. Hauptbremszylinder 13 dient z.B. der Druckbeaufschlagung der Radbremsen durch den Fahrer in einer Rückfallbetriebsart des Bremssystems, wenn die Radbremsen mit dem Druckraum des Hauptbremszylinders 13 verbunden sind. Die Längsachse des Hauptbremszylinders 13 ist vorteilhafterweise im Wesentlichen parallel zur Fahrtrichtung des Kraftfahrzeugs angeordnet.

Die elektrisch betätigbaren Ventile 15 der Hydraulikeinheit 10 sind z.B. zum Einstellen radindividueller Bremsdrücke an den Radbremsen und/oder zum Trennen/Verbinden der Druckquelle 14 oder des Hauptbremszylinders 13 mit den Radbremsen vorgesehen.

Die elektrisch steuerbare Druckquelle 14 ist beispielsgemäß als eine hydraulische Zylinder-Kolben-Anordnung ausgeführt, deren Kolben 18 in einem Zylinder 16 durch den Elektromotor 30 mittels eines Rotations-Translations-Getriebes 17 entlang der Längsachse (Zylinderachse) der Zylinder-Kolben-Anordnung verschiebbar ist. Das Getriebe 17 ist beispielsgemäß als ein Kugelgewindetrieb oder Rollengewindetrieb ausgebildet. Eine der Erfassung der Rotorlage des Elektromotors 30 dienende, lediglich schematisch angedeutete Rotorlagesensorik ist mit dem Bezugszeichen 36 bezeichnet.

In einer "Brake-by-wire"-Betriebsart des Bremssystems können die Radbremsen mittels des Druckes in Druckraum 19 der Druckquelle 14 betätigt werden. Hierzu ist der Elektromotor 30 nach Maßgabe einer Bremspedalbetätigung ansteuerbar.

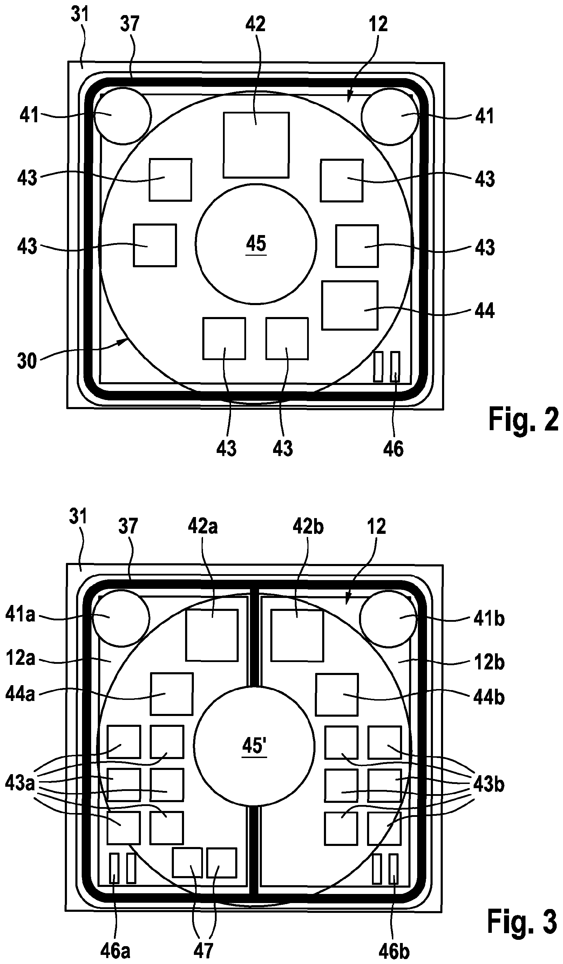

Druckquelle 14 ist zumindest teilweise innerhalb der Hydraulikeinheit 10 angeordnet. Beispielsgemäß erstreckt sich Zylinder 16 durch die Leiterplatte 12, welche hierzu ein Ausnehmung aufweist (siehe Bezugszeichen 45 bzw. 45' in Fig. 2 bzw. Fig. 3), in die Hydraulikeinheit 10.

An einer oberen Seitenfläche der Hydraulikeinheit 10 ein unter Atmosphärendruck stehender Druckmittelvorratsbehälter 50 angeordnet.

Der Hauptbremszylinder 13, die Ventile 15 und die Druckquelle 14 sind ganz oder mindestens zum Teil innerhalb der Hydraulikeinheit 10 angeordnet.

Hydraulikeinheit 10 umfasst weiterhin (nicht dargestellte) hydraulische Anschlüsse für die Verbindungen zu den Radbremsen.

Die Längsachse des Elektromotors 30 ist senkrecht oder annähernd senkrecht zur Längsachse des Hauptbremszylinders 13 angeordnet. Ebenso ist die Längsachse der Druckquelle 14 senkrecht oder annähernd senkrecht zur Längsachse des Hauptbremszylinders 13 angeordnet. Elektromotor 30 und Zylinder-Kolben-Anordnung der Druckquelle 14 sind auf einer gemeinsamen Achse, fluchtend angeordnet.

Kontrolleinheit 20 umfasst eine (erste) Leiterplatte 21, auf welcher elektrische und/oder elektronische Bauelemente zur Ansteuerung der Ventile 15 der Hydraulikeinheit 10 angeordnet sind. Weiterhin ist auf der ersten Leiterplatte 21 mindestens ein Anschlussstecker vorgesehen, zur Versorgung der elektronischen Kontrolleinheit 20 bzw. der Leiterplatte 21 mit elektrischer Energie. Die Leiterplatte 21 wird vorteilhafterweise durch ein Steuergerätgehäuse 22 geschützt.

Kontrolleinheit 20 dient zumindest der Ansteuerung der Ventile 15 und ist beispielsgemäß an einer zweiten, dem Elektromotor 30 entgegengesetzten Seitenfläche der Hydraulikeinheit 10 angeordnet. Die elektrischen Verbindungen zwischen dem Elektromotor 30 und der Kontrolleinheit 20, z.B. zur Übertragung von (Sensor)Signalen, erstrecken sich zum Schutz der elektrischen Verbindungen vorteilhafterweise durch die Hydraulikeinheit 10.

Die Ventile 15 sind vorteilhafterweise ebenfalls auf der dem Elektromotor 30 entgegengesetzten Seitenfläche der Hydraulikeinheit 10 angeordnet, so dass eine einfache elektrische oder magnetische Verbindung zwischen Ventilen 15 und elektronischer Kontrolleinheit 20 möglich ist. Die Ventile 15 werden vorteilhafterweise von dem Steuergerätgehäuse 22 abgedeckt.

Vorteilhafterweise umfasst das Kraftfahrzeugsteuergerät 1 einen Bremspedalgefühlsimulator (nicht dargestellt), welcher in der "Brake-by-wire"-Betriebsart dem Fahrzeugführer ein angenehmes Bremspedalgefühl vermittelt. Bremspedalgefühlsimulator kann sich ganz oder teilweise innerhalb des Hydraulikeinheit 10 erstreckt. Alternativ kann der Bremspedalgefühlsimulator als eigenständiges Modul ausgeführt sein.

Zur Versorgung des Kraftfahrzeugsteuergeräts 1 mit elektrischer Energie sind beispielsgemäß eine erste elektrische Energieversorgungseinheit und eine zweite elektrische Energieversorgungseinheit vorgesehen (nicht dargestellt in Fig. 1), wobei die beiden Energieversorgungseinheiten unabhängig voneinander sind.

Bei Kraftfahrzeugsteuergeräten, bei welchen die Leistungselektronik des Elektronmotors in die, auf der dem Elektromotor gegenüberliegenden Seite der Hydraulikeinheit angeordnete elektronische Kontrolleinheit bzw. auf der (ersten) Leiterplatte der elektronischen Kontrolleinheit integriert ist, erfordert die Kontaktierung von Elektronmotor und elektronischer Kontrolleinheit bzw. erster Leiterplatte einen Stecker, der aufgrund der geforderten Unempfindlichkeit gegen Micro-Friction (verursacht durch wechselnde Temperaturausdehnungen) aufwendig, groß und teuer ist. Weiterhin ist für die Kühlung der Leistungselektronik ein aufwendiger Kühlmechanismus notwendig. Von Nachteil ist auch, dass die für die Leistungselektronik geforderten Leitungsquerschnitte innerhalb der (ersten) Leiterplatte zu einer teuren Leiterplatte führen, die für die großen anderen Bereiche der Leiterplatte, wo nur Signalleitungen geführt werden müssen, überdimensioniert ist.

Die genannten Nachteile werden beispielsgemäß durch die Anordnung der Leistungselektronik 40 des Elektromotors 30 auf einer zweiten, getrennt von der elektronischen Kontrolleinheit 20 angeordneten Leiterplatte 12 beseitigt. Hierdurch werden weiterhin Vorteile in Bezug auf das Boxvolumen des Kraftfahrzeugsteuergerät 1, die Kosten und die Performance erreicht. Auch ist es so unter Beibehaltung der ersten Leiterplatte 21 relativ kostengünstig möglich, durch eine redundante Ausführung der zweiten Leiterplatte 12 eine redundante Normalbremsfunktion (d.h. "Brake-by-wire"-Funktion) darzustellen.

Beispielsgemäß sind die Leistungselektronik-Bauelemente (bzw. ist die zweite Leiterplatte 12) zur Ansteuerung des Elektromotors 30 auf der Elektromotorseite der Hydraulikeinheit 10 angeordnet, d.h. die zweite Leiterplatte 12 ist im Bereich der Seitenfläche angeordnet, an welcher der Elektromotor 30 angeordnet ist. Dabei sind die elektronische Kontrolleinheit 20 einerseits und der Elektromotor 30 und die zweite Leiterplatte 12 andererseits an unterschiedlichen Seitenflächen der Hydraulikeinheit 10 angeordnet. So kann die erste Leiterplatte 21 der elektronischen Kontrolleinheit 20 (welche keine Leistungselektronik-Bauelemente zur Ansteuerung des Elektromotors umfasst) ohne dicke Kupfer-Layer deutlich kostengünstiger ausgebildet werden. Vorteilhafterweise sind die Leistungselektronik-Bauelemente zur Ansteuerung des Elektromotors 30 (ist die Leistungselektronik 40) auf der der elektronischen Kontrolleinheit 20 gegenüberliegenden Seitenfläche der Hydraulikeinheit 10 angeordnet. Dadurch wird die aufwändige Durchkontaktierung der Hochstromleitungen durch die Hydraulikeinheit 10 nicht mehr erforderlich. Die hochstromfähige, und damit teurere, zweite Leiterplatte 12 ist in Vergleich zur ersten Leiterplatte 21 kleiner.

Besonders vorteilhaft ist die in Fig. 1 dargestellte Anordnung der zweiten Leiterplatte 12 (bzw. Leistungselektronik) zwischen Elektromotor 30 und Hydraulikeinheit 10. Hierdurch besteht die Möglichkeit, die Wärme der Treiber und Prozessor-Bauteile (der Leistungselektronik 40) direkt an die Hydraulikeinheit 10 abzuleiten. Damit entfallen aufwändige Kühlmaßnahmen auf der Seite der elektronischen Kontrolleinheit 20 bzw. der ersten Leiterplatte 21.

Um eine kompaktere Gesamtbauweise und damit eine Verkleinerung des Box-Volumens zu erreichen, ist in dem Zwischenraum zwischen Stator 33 und Hydraulikeinheit 10 die Leiterplatte 12 mit der Leistungselektronik 40 angeordnet.

Zur Anordnung der zweiten Leiterplatte 12 zwischen Elektromotor 30 und Hydraulikeinheit 10 weist die zweite Leiterplatte 12 eine Ausnehmung auf (siehe Fig. 2 und 3) . Durch die Ausnehmung ist ein Teil der Druckquelle 14 hindurchgeführt. Beispielsgemäß ist durch die Ausnehmung der Zylinder 16 der Druckquelle 14 hindurchgeführt.

Weiterhin wird bei entsprechender Ausprägung der Anschlussenden der Motorwicklungen des Elektromotors 30 eine direkte Kontaktierung (z.B. Lötung, Schweißung oder Pressfit) mit der zweiten Leiterplatte durchgeführt. Damit kann ein teurer Stecker zur Stromverteilung entfallen, der die Wicklungen des Elektromotors separat zusammenführt. So ist auch eine höhere Ausnutzung des Bordnetzspannungsniveaus möglich durch die robuste und mit geringen Widerstandswerten versehene elektrische Verbindung im Vergleich zu einer lösbaren Steckverbindung.

In Fig. 2 ist ein erstes Ausführungsbeispiel einer zweiten Leiterplatte 12 dargestellt. Fig. 2 zeigt weiterhin das Motorgehäuse 31, eine Dichtung 37 und schematisch durch einen Kreis angedeutet, den hinter der Leiterplatte 12 angeordneten Elektromotor 30. Leiterplatte 12 ist einteilig ausgebildet und weist eine Ausnehmung 45 in Form eines Lochs zur Durchführung der Druckquelle 14 auf. Auf Leiterplatte 12 sind beispielsgemäß zumindest ein Kondensator 41, ein Mikrocontroller 42 zur Steuerung/Regelung des Elektromotors 30, zumindest ein Treiber-Bauelement 43, ein weiterer Mikrocontroller 44 (GDU: Gate Driver Unit) und ein Verbindungselement 46 zur Verbindung mit einer elektrischen Energiequelle vorgesehen.

Die GDU 44 ist bevorzugt ein integrierter Schaltungsbaustein mit Elementen, die die Brückentreiber 43 ansteuern und überwachen. Die Bausteine werden bei dreiphasigen bürstenlosen Motoren zur Ansteuerung verwendet. Alternativ können die Treiber 43 in die GDU 44 integriert sein.

Die Leistungselektronik-Bauelemente zur Ansteuerung des Elektromotors 30, welche auf der zweiten Leiterplatte 12 angeordnet sind, umfassen bevorzugt sechs Treiber-Bauelemente 43 und die GDU 44. Besonders bevorzugt sind auch die Kondensatoren 41 auf der zweiten Leiterplatte 12 angeordnet.

Vorteilhafterweise ist zumindest ein Kondensator 41, insbesondere die Kondensatoren, oder zumindest eine Spule (Indukivität) in ein oder mehrere Taschen der Motorumspritzung untergebracht.

Weiterhin ist bevorzugt zumindest ein Stecker an der Motorseite angeschlossen.

In Fig. 3 ein zweites Ausführungsbeispiel einer zweiten Leiterplatte 12 dargestellt. Im Unterschied zum Ausführungsbeispiel der Fig. 2 ist Leiterplatte 12 zweiteilig mit einem ersten Leiterplattenteil 12a und einem zweiten Leiterplattenteil 12b ausgeführt.

Die Leiterplattenteile 12a, 12b sind derart, beispielsgemäß mit je einer halbkreisförmigen Aussparung, ausgeformt, dass sie eine Ausnehmung 45' zur Durchführung der Druckquelle 14 bilden.

Die Elektronik der Leiterplatte 12 ist vorteilhafterweise redundant auf den beiden Leiterplattenteilen 12a, 12b ausgeführt. So sind beispielsgemäß auf jeder der Leiterplattenteile 12a, 12b zumindest ein Kondensator 41a bzw. 41b, ein Mikrocontroller 42a bzw. 42b zur Steuerung/Regelung des Elektromotors 30, zumindest ein Treiber-Bauelement 43a bzw. 43b, eine GDU 44a bzw. 44b und ein Verbindungselement 46a bzw. 46b zur Verbindung mit einer elektrischen Energiequelle vorgesehen. Vorteilhafterweise wird jedes Leiterplattenteil 12a, 12b von einer separaten elektrischen Energiequelle versorgt (redundante Energieversorgung).

Die Leistungselektronik-Bauelemente zur Ansteuerung des Elektromotors 30, welche auf jeder der Leiterplattenteile 12a, 12b angeordnet sind, umfassen bevorzugt sechs Treiber-Bauelemente 43a bzw. 43b und die GDU 44a bzw. 44b.

Vorteilhafterweise befindet sich auf Leiterplatte 12, beispielsgemäß auf einem der Leiterplattenteile 12a, zumindest ein Treiber 47 zur Ansteuerung einer elektrischen Parkbremse oder integrierten Parkbremse.

Ein weiterer Vorteil der Trennung der Leistungselektronik 40 des Elektromotors 30 von der übrigen Elektronik der elektronischen Kontrolleinheit 20 ist die Reduzierung der Anzahl der möglichen commen-mode-Fehler bei redundanter Auslegung der Elektronik. So kann beispielsweise die redundante Energieversorgung (ggf. auch 48 Volt) vollständig von der elektronischen Kontrolleinheit (20) ferngehalten werden.

## Patentansprüche

1. Elektrohydraulisches Kraftfahrzeugsteuergerät (1), insbesondere für ein Kraftfahrzeugbremssystem, umfassend eine Hydraulikeinheit (10) mit elektrisch betätigbaren Ventilen (15), eine elektronische Kontrolleinheit (20), welche eine erste Leiterplatte (21) mit elektrischen und/oder elektronischen Bauelementen zur Ansteuerung der Ventile (15) umfasst, und einen Elektromotor (30) zum Antreiben einer elektrisch steuerbaren, hydraulischen Druckquelle (14), wobei elektrische und/oder elektronische Bauelemente (40a, 40b), insbesondere Leistungselektronik-Bauelemente, zur Ansteuerung des Elektromotors (30) auf einer zweiten Leiterplatte (12) angeordnet sind, welche getrennt von der elektronischen Kontrolleinheit (20) angeordnet ist, **dadurch gekennzeichnet, dass** die zweite Leiterplatte (12) zweiteilig mit einem ersten und einem zweiten Leiterplattenteil (12a, 12b) ausgeführt ist, und dass die elektrischen und/oder elektronischen Bauelemente, insbesondere die Leistungselektronik-Bauelemente, zur Ansteuerung des Elektromotors (30) redundant, auf dem ersten und dem zweiten Leiterplattenteil (12a, 12b) ausgeführt sind.

2. Kraftfahrzeugsteuergerät (1) nach Anspruch 1, **dadurch gekennzeichnet, dass** die elektronische Kontrolleinheit (20) und der Elektromotor (30) an unterschiedlichen, insbesondere einander gegenüberliegenden, Seitenflächen der Hydraulikeinheit (10) angeordnet sind, und dass die zweite Leiterplatte (12) im Bereich der Seitenfläche angeordnet ist, an welcher der Elektromotor (30) angeordnet ist.

3. Kraftfahrzeugsteuergerät (1) nach Anspruch 1 oder 2, **dadurch gekennzeichnet, dass** die zweite Leiterplatte (12) zwischen der Hydraulikeinheit (10) und dem Elektromotor (30) angeordnet ist.

4. Kraftfahrzeugsteuergerät (1) nach einem der vorhergehenden Ansprüche, **dadurch gekennzeichnet, dass** die zweite Leiterplatte (12) eine Ausnehmung (45, 45') aufweist, durch welche ein Teil der Druckquelle (14) hindurchgeführt ist.

5. Kraftfahrzeugsteuergerät (1) nach Anspruch 4, **dadurch gekennzeichnet, dass** durch die Ausnehmung (45, 45') der zweiten Leiterplatte (12) ein Zylinder (16) oder ein Rotations-Translations-Getriebe (17) der Druckquelle (14) hindurchgeführt ist.

6. Kraftfahrzeugsteuergerät (1) nach einem der vorhergehenden Ansprüche, **dadurch gekennzeichnet, dass** die Druckquelle (14) als eine hydraulische Zylinder-Kolben-Anordnung ausgeführt ist, deren Kolben (18) durch den Elektromotor (30) mittels eines Rotations-Translations-Getriebes (17) verschiebbar ist.

7. Kraftfahrzeugsteuergerät (1) nach einem der vorhergehenden Ansprüche, **dadurch gekennzeichnet, dass** die Anschlüsse der Motorwicklungen des Elektromotors (30) direkt auf der zweiten Leiterplatte (12) kontaktiert sind.

8. Kraftfahrzeugsteuergerät (1) nach einem der vorhergehenden Ansprüche, **dadurch gekennzeichnet, dass** der Elektromotor (30) umspritzt ist.

9. Kraftfahrzeugsteuergerät (1) nach Anspruch 8, **dadurch gekennzeichnet, dass** zumindest ein elektrisches oder elektronisches Bauelement der zweiten Leiterplatte (12), insbesondere ein Kondensator oder eine Induktivität, in einer Tasche der Umspritzung angeordnet ist.

10. Kraftfahrzeugsteuergerät (1) nach einem der Ansprüche 1 bis 9, wenn rückbezogen auf Anspruch 4, **dadurch gekennzeichnet, dass** die Leiterplattenteile (12a, 12b) derart ausgebildet sind, dass sie die Ausnehmung (45') zur Durchführung eines Teils der Druckquelle (14) bilden.

11. Kraftfahrzeugsteuergerät (1) nach einem der Ansprüche 1 bis 10, **dadurch gekennzeichnet, dass** die Versorgung der zweiten Leiterplatte (12) mit elektrischer Energie redundant ausgeführt ist.

12. Kraftfahrzeugsteuergerät (1) nach einem der vorhergehenden Ansprüche, **dadurch gekennzeichnet, dass** in der Hydraulikeinheit (10) ein bremspedalbetätigbarer Hauptbremszylinder (13) angeordnet ist.

13. Kraftfahrzeugsteuergerät (1) nach einem der vorhergehenden Ansprüche, **dadurch gekennzeichnet, dass** ein Bremspedalgefühlsimulator zumindest teilweise in der Hydraulikeinheit (10) angeordnet ist.

## Claims

1. Electrohydraulic motor vehicle control device (1), in particular for a motor vehicle brake system, comprising a hydraulic unit (10) with valves (15) which can be activated electrically, an electronic control unit (20) which comprises a first circuit board (21) with electrical and/or electronic components for actuating the valves (15), and an electric motor (30) for driving an electrically controllable, hydraulic pressure source (14), wherein electrical and/or electronic components (40a, 40b), in particular power electronics components for actuating the electric motor (30) are arranged on a second circuit board (12) which is arranged separate from the electronic control unit (20), **characterized in that** the second circuit board (12) is embodied in two parts with a first and a second circuit board part (12a, 12b), and **in that** the electrical and/or electronic components, in particular the power electronics components, are embodied redundantly with respect to the actuation of the electric motor (30), on the first and second circuit board parts (12a, 12b).

2. Motor vehicle control device (1) according to Claim 1, **characterized in that** the electronic control unit (20) and the electric motor (30) are arranged on different, in particular opposite, side faces of the hydraulic unit (10), and **in that** the second circuit board (12) is arranged in the region of the side face on which the electric motor (30) is arranged.

3. Motor vehicle control device (1) according to Claim 1 or 2, **characterized in that** the second circuit board (12) is arranged between the hydraulic unit (10) and the electric motor (30).

4. Motor vehicle control device (1) according to one of the preceding claims, **characterized in that** the second circuit board (12) has a cutout (45, 45') through which part of the pressure source (14) is guided.

5. Motor vehicle control device (1) according to Claim 4, **characterized in that** a cylinder (16) or a rotational-translational gear mechanism (17) of the pressure source (14) is guided through the cutout (45, 45') in the second circuit board (12).

6. Motor vehicle control device (1) according to one of the preceding claims, **characterized in that** the pressure source (14) is embodied as a hydraulic cylinder-piston arrangement whose piston (18) can be moved by the electric motor (30), by means of a rotational-translation gear mechanism (17).

7. Motor vehicle control device (1) according to one of the preceding claims, **characterized in that** contact is made with the connections of the motor windings of the electric motor (30) directly on the second circuit board (12) .

8. Motor vehicle control device (1) according to one of the preceding claims, **characterized in that** the electric motor (30) is encapsulated by injection moulding.

9. Motor vehicle control device (1) according to Claim 8, **characterized in that** at least one electrical or electronic component of the second circuit board (12), in particular a capacitor or an inductor, is arranged in a pocket of the injection moulded encapsulation.

10. Motor vehicle control device (1) according to one of Claims 1 to 9, when referred back to Claim 4, **characterized in that** the circuit board parts (12a, 12b) are embodied in such a way that they form the cutout (45') for part of the pressure source (14) to be guided through.

11. Motor vehicle control device (1) according to one of Claims 1 to 10, **characterized in that** the supply of the second circuit board (12) with electrical energy is embodied in a redundant fashion.

12. Motor vehicle control device (1) according to one of the preceding claims, **characterized in that** a master brake cylinder (13) which can be activated with a brake pedal is arranged in the hydraulic control unit (10).

13. Motor vehicle control device (1) according to one of the preceding claims, **characterized in that** a brake pedal sensation simulator is arranged at least partially in the hydraulic unit (10).

## Revendications

1. Dispositif de commande de véhicule automobile électrohydraulique (1), destiné en particulier à un système de freinage de véhicule automobile, ledit dispositif comprenant une unité hydraulique (10) pourvue de soupapes actionnées électriquement (15), une unité de commande électronique (20) qui comporte une première carte de circuit imprimé (21) pourvue de composants électriques et/ou électroniques et destinée à commander les soupapes (15) et un moteur électrique (30) destiné à entraîner une source de pression hydraulique (14) à commande électrique, des composants électriques et/ou électroniques (40a, 40b), en particulier des composants électroniques de puissance, destinés à commander le moteur électrique (30) étant disposés sur une deuxième carte de circuit imprimé (12) qui est disposée séparément de l'unité de commande électronique (20), **caractérisé en ce que** la deuxième carte de circuit imprimé (12) est réalisée en deux parties comportant une première et une deuxième partie de carte de circuit imprimé (12a, 12b), et **en ce que** les composants électriques et/ou électroniques, en particulier les composants électroniques de puissance, sont réalisés sur la première et la deuxième partie de carte de circuit imprimé (12a, 12b) pour commander le moteur électrique (30) de manière redondante.

2. Dispositif de commande de véhicule automobile (1) selon la revendication 1, **caractérisé en ce que** l'unité de commande électronique (20) et le moteur électrique (30) sont disposés sur des surfaces latérales différentes, notamment opposées, de l'unité hydraulique (10), et **en ce que** la deuxième carte de circuit imprimé (12) est disposée dans la zone de la surface latérale sur laquelle le moteur électrique (30) est disposé.

3. Dispositif de commande de véhicule automobile (1) selon la revendication 1 ou 2, **caractérisé en ce que** le deuxième circuit imprimé (12) est disposé entre l'unité hydraulique (10) et le moteur électrique (30).

4. Dispositif de commande de véhicule automobile (1) selon l'une des revendications précédentes, **caractérisé en ce que** la deuxième carte de circuit imprimé (12) comporte un évidement (45, 45') traversée par une partie de la source de pression (14).

5. Dispositif de commande de véhicule automobile (1) selon la revendication 4, **caractérisé en ce que** l'évidement (45, 45') de la deuxième carte de circuit imprimé (12) est traversé par un cylindre (16) ou une transmission en rotation-translation (17) de la source de pression (14).

6. Dispositif de commande de véhicule automobile (1) selon l'une des revendications précédentes, **caractérisé en ce que** la source de pression (14) est réalisée sous la forme d'un ensemble cylindre-piston hydraulique dont le piston (18) peut coulisser grâce au moteur électrique (30) au moyen d'une transmission en rotation-translation (17).

7. Dispositif de commande de véhicule automobile (1) selon l'une des revendications précédentes, **caractérisé en ce que** les bornes des enroulements du moteur électrique (30) sont directement mises en contact sur la deuxième carte de circuit imprimé (12).

8. Dispositif de commande de véhicule automobile (1) selon l'une des revendications précédentes, **caractérisé en ce que** le moteur électrique (30) est surmoulé.

9. Dispositif de commande de véhicule automobile (1) selon la revendication 8, **caractérisé en ce qu'**au moins un composant électrique ou électronique de la deuxième carte de circuit imprimé (12), notamment un condensateur ou une inductance, est disposé dans une poche du surmoulage.

10. Dispositif de commande de véhicule automobile (1) selon l'une des revendications 1 à 9, lorsqu'elle dépend de la revendication 4, **caractérisé en ce que** les parties de carte de circuit imprimé (12a, 12b) sont conçues de façon à former l'évidement (45') pour réaliser une partie de la source de pression (14).

11. Dispositif de commande de véhicule automobile (1) selon l'une des revendications 1 à 10, **caractérisé en ce que** l'alimentation de la deuxième carte de circuit imprimé (12) en énergie électrique est réalisée de manière redondante.

12. Dispositif de commande de véhicule automobile (1) selon l'une des revendications précédentes, **caractérisé en ce qu'**un maître-cylindre de frein (13) actionnable par pédale est disposé dans l'unité hydraulique (10).

13. Dispositif de commande de véhicule automobile (1) selon l'une des revendications précédentes, **caractérisé en ce qu'**un simulateur de sensation de pédale de frein est disposé au moins en partie dans l'unité hydraulique (10) .
